# EUROPÄISCHE PATENTSCHRIFT

(11) **EP 3 190 345 B1**
(45) Veröffentlichungstag und Bekanntmachung des Hinweises auf die Patenterteilung: **06.03.2019**
(21) Anmeldenummer: 16197270.8
(22) Anmeldetag: 04.11.2016
(51) Int. Cl.: F24D 19/00, F04D 15/00, F24D 19/10, G01F 1/86, G01N 11/02, F24S 40/70

(54) **VERFAHREN ZUR BESTIMMUNG DES FROSTSCHUTZMITTELGEHALTS EINES WÄRMETRÄGERMEDIUMS IN EINEM HYDRAULISCHEN KREISLAUF EINES HEIZSYSTEMS**
METHOD FOR DETERMINING THE ANTIFREEZE AGENT CONTENT OF A HEAT TRANSFER MEDIUM IN A HYDRAULIC CIRCUIT OF A HEATING SYSTEM
PROCÉDÉ DE DÉTERMINATION DE LA TENEUR EN ANTIGEL D'UN FLUIDE CALOPORTEUR DANS UN CIRCUIT HYDRAULIQUE D'UN SYSTÈME DE CHAUFFAGE

(30) Priorität: 20.11.2015 DE 102015222909
(43) Veröffentlichungstag der Anmeldung: 12.07.2017
(73) Patentinhaber: Vaillant GmbH, 42859 Remscheid (DE)
(72) Erfinder: Hránek, Miroslav, 90844 Petrova Ves (SK)
(74) Vertreter: Popp, Carsten

(56) Entgegenhaltungen:
- EP-A1- 2 696 175
- EP-A1- 2 746 742
- US-A1- 2003 033 859
- US-A1- 2005 216 178

## Beschreibung

Die Erfindung betrifft ein Verfahren zur Bestimmung des Frostschutzmittelgehalts eines Wärmeträgermediums in einem hydraulischen Kreislauf eines Heizsystems.

Ein gattungsgemäßer hydraulischer Kreislauf ist am Beispiel einer solarthermischen Anlage aus der Patentanmeldung EP 2009359 A2 bekannt. Die solarthermische Anlage besteht aus einem Solarkollektor, der in einem Kreislauf von einem Wärmeträgermedium durchströmt wird, welches die solare Wärme aufnimmt und über einen im hydraulischen Kreislauf eingebundenen Wärmetauscher in einem Wärmespeicher eingelagert. Das Wärmeträgermedium wird im Kreislauf von einer Umwälzpumpe umgewälzt. Kennzeichnend für diese Art von Heizkreislauf ist, dass das Wärmeträgermedium Temperaturen unter dem Gefrierpunkt ausgesetzt sein kann. Aus diesem Grund wird als Wärmeträgermedium eine Mischung aus Wasser und einem Frostschutzmittel, beispielsweise Glykol oder Ethanol verwendet. Gleiches gilt für andere hydraulische Kreisläufe, die Temperaturen unter dem Gefrierpunkt ausgesetzt sein können. Dies sind Solekreisläufe von Wärmepumpen, insbesondere Luft-Wasser-Wärmepumpen, die als Wärmequelle die Außenluft nutzen, sowie Heizkreisläufe innerhalb von zeitweise nicht genutzten Gebäuden, die im Winter unter den Gefrierpunkt auskühlen.

Aus der Patentanmeldung EP 2 746 742 A1 ist eine Vorrichtung zur Messung thermischer Energie bekannt, die mittels eines Wärmeträgermediums mit einem Frostschutzmittel übertragen wird. Der Frostschutzmittelgehalt des Wärmeträgermediums wird direkt oder indirekt mit einem Werkstoffeigenschaften-Sensor erfasst, der in Kontakt mit dem Wärmeträgermedium steht. Dies ist ein Dichtesensor, ein Schallgeschwindigkeitssensor, ein Viskositätssensor, ein Schallimpedanzsensor, ein Ultraschallsensor, oder ein elektrischer Leitfähigkeitssensor. Weiterhin werden Vor- und Rücklauftemperaturen und der Volumenstrom gemessen, um die thermische Energie zu bestimmen.

Bei der Installation und Wartung der aus der Patentanmeldung EP 2009359 A2 bekannten gattungsgemäßen hydraulischen Kreisläufe besteht das Risiko, dass der Kreislauf mit einem Wärmeträgermedium gefüllt wird, der keine ausreichende Frostsicherheit aufweist. Dies ist dann der Fall, wenn vergessen wurde, dem Wasser Frostschutzmittel hinzuzufügen oder zu wenig Frostschutzmittel hinzugefügt wurde.

Es ist daher Aufgabe der Erfindung, ein Verfahren bereitzustellen, mit dem der Frostschutzmittelgehalt des Wärmeträgermediums durch das Heizsystem selbst gemessen und überprüft werden kann.

Diese Aufgabe wird durch ein Verfahren gemäß den Merkmalen des unabhängigen Anspruchs gelöst. Das erfindungsgemäße Verfahren macht sich die Tatsache zu Nutze, dass der Gehalt an Frostschutzmittel einen Einfluss auf die Viskosität des Wärmeträgermediums hat. Diese Viskosität wird wiederum indirekt ermittelt, indem ein aus den Kenndaten der Umwälzpumpe ermittelter Volumenstrom V̇ₚ mit einem von einem Volumenstromsensor gemessenen Volumenstrom V̇ᵢₛₜ verglichen wird und um den Einfluss der Temperatur auf die Viskosität korrigiert wird. Dazu wird als Verfahrensschritt zunächst der berechnete Volumenstrom V̇ₚ der Umwälzpumpe ermittelt. Dies erfolgt nach einem aus der Patentanmeldung EP 2 696 175 A1 oder den darin zitierten Druckschriften bekannten Verfahren. Dabei werden die Drehzahl der Umwälzpumpe sowie ein elektrischer Kennwert wie beispielsweise Strom- oder Leistungsaufnahme der Umwälzpumpe und/oder ein hydraulischer Kennwert wie beispielsweise der Druck oder die Druckdifferenz vor und hinter der Pumpe verwendet, um zusammen mit einem Pumpenmodell (Pumpenkennlinien) der Umwälzpumpe einen Volumenstrom zu berechnen. Das Pumpenmodell kann eine beispielsweise in einer Tabelle abgelegte Kennlinienschar oder ein parametrisches Prozessmodell sein, dessen Parameter hinterlegt sind. Somit kann anhand der Drehzahl und des elektrischen oder hydraulischen Kennwerts durch Nachschlagen in der Tabelle und gegebenenfalls durch Interpolation oder durch Berechnung anhand des Prozessmodells der Volumenstrom V̇ₚ ermittelt werden. In einem zweiten Verfahrensschritt ii), der auch zeitgleich zum oder vor dem ersten Verfahrensschritt i) erfolgen kann, wird mit einem geeigneten Messgerät der tatsächliche Volumenstrom V̇ᵢₛₜ gemessen. In einem dritten Verfahrensschritt iii), der ebenfalls zeitgleich nach oder vor den ersten beiden Verfahrensschritten i) und ii) oder aber auch asynchron erfolgen kann, wird mittels eines Temperatursensors die Temperatur des von der Umwälzpumpe geförderten und vom Volumenstromsensor gemessenen Wärmeträgermedium gemessen.

Aus den so gemessenen bzw. berechneten Werten für den Volumenstrom wird in einem Verfahrensschritt iv) anhand eines hydraulischen Prozessmodells die Viskosität des Wärmeträgermediums und in einem Verfahrensschritt v) unter Berücksichtigung der Temperatur der Frostschutzmittelgehalt des Wärmeträgermediums berechnet.

Alternativ wird in einem bevorzugten Verfahrensschritt iv'), der die Verfahrensschritte iv) und v) zusammenfasst, mittels eines alternativen Prozessmodells direkt aus den gemessenen bzw. berechneten Werten für den Volumenstrom und der Temperatur der Frostschutzmittelgehalt berechnet.

Die hydraulischen Prozessmodelle können als Tabelle oder als parametrische Funktion vorliegen.

Bevorzugt wird der im Verfahrensschritt i) berechnete Volumenstrom V̇ₚ bereits vom Steuergerät der Umwälzpumpe bereitgestellt.

Das erfindungsgemäße Verfahren wird bevorzugt an einer solarthermischen Anlage oder an einer Wärmepumpenanlage eingesetzt.

Es hat sich gezeigt, dass die Viskosität des Frostschutzmittels sich insbesondere bei niedrigen Temperaturen von der des Wassers unterscheidet. Daher können bei niedrigen Temperaturen durch das erfindungsgemäße Verfahren besonders zuverlässige Ergebnisse für den Frostschutzmittelgehalt erzielt werden. Daher wird dieses Verfahren bevorzugt mit einem Wärmeträgermedium bei Umgebungstemperatur unter 40 °C durchgeführt. Im Fall einer Solaranlage ist dies beispielsweise unmittelbar nach dem Befüllen des hydraulischen Kreislaufs mit dem Wärmeträgermedium oder bei fehlender Sonnenstrahlung der Fall.

Die Erfindung wird nun anhand der Figuren detailliert erläutert. Es stellen dar:
Figur 1: eine Vorrichtung zum Durchführen des erfindungsgemäßen Verfahrens,
Figur 2: den Verlauf der Viskosität über die Temperatur für verschiedene Mischungsverhältnis zwischen Wasser und Frostschutzmittel am Beispiel des Frostschutzmittels Propylenglykol,
Figur 3: Kalibrierkurven für den vom Volumenstromsensor ermittelten Volumenstrom sowie für den aus den Parametern der Umwälzpumpe berechneten Volumenstrom.

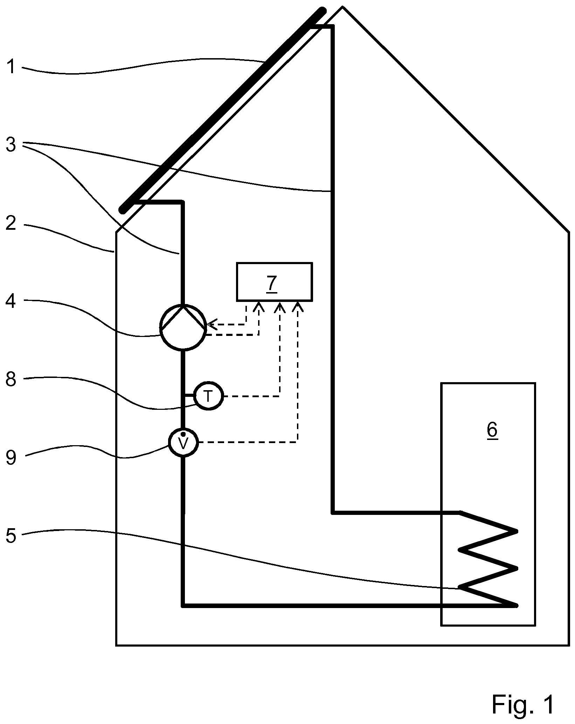

Figur 1 zeigt exemplarisch eine Vorrichtung zur Durchführung des erfindungsgemäßen Verfahrens. Ein Heizsystem besteht beispielsweise aus einem Solarkollektor 1, einer Wärmesenke 6 mit einem Wärmetauscher 5, und einem hydraulischen Kreislauf 3, in dem die vom Solarkollektor 1 gewonnene Wärme einer hier nicht dargestellten Wärmequelle, in diesem Fall Sonnenenergie, mittels eines Wärmeträgermediums zur Wärmesenke 6 übertragen wird. Eine Umwälzpumpe 4 fördert das Wärmeträgermedium im hydraulischen Kreislauf 3. Da sich Teile des hydraulischen Kreislaufs 3 sowie der Solarkollektor 1 außerhalb des Gebäudes 2 befinden und somit das Wärmeträgermedium Temperaturen unter dem Gefrierpunkt ausgesetzt ist, wird als Wärmeträgermedium in der Regel ein Gemisch aus Wasser und einem Frostschutzmittel verwendet. Das erfindungsgemäße Verfahren macht sich die Tatsache zunutze, dass der Gehalt an Frostschutzmittel in dem Wärmeträgermedium die Viskosität beeinflusst. Erfindungsgemäß wird der Einfluss der Viskosität auf die Berechnung des Volumenstroms durch die Steuerung der Umwälzpumpe 4 ausgenutzt. In der Regel liefern bereits elektronisch gesteuerte Umwälzpumpen 4 Signale, die den geförderten Volumenstrom repräsentieren und auf der Basis der Pumpendrehzahl, hydraulischen oder elektrischen Messwerten und einem die Pumpenkennlinien repräsentierenden Pumpenmodell berechnet werden. Diese Werte werden von der Umwälzpumpe 4 beispielsweise in Form eines PWM-Signals einem Steuergerät 7 zur Verfügung gestellt. Alternativ ist es auch möglich, dass das Steuergerät 7 selbst den durch die Umwälzpumpe 4 geförderten Volumenstrom nach den aus dem Stand der Technik bekannten Verfahren ermittelt. Der so berechnete Volumenstrom wird mit einem von einem Volumenstromsensor 9 gemessenen Volumenstrom verglichen. Abweichungen des berechneten vom gemessenen Volumenstrom sind ein Indikator dafür, dass die Viskosität des Wärmeträgermediums von der Viskosität abweicht, die dem Pumpenmodell zu Grunde liegt. Da die Temperatur des Wärmeträgermediums ebenfalls die Viskosität des Frostschutzmittels und damit des aus einer Mischung aus Wasser und Frostschutzmittel bestehenden Wärmeträgermediums beeinflusst, wird erfindungsgemäß mittels eines Temperatursensors 8 die Temperatur des Wärmeträgermediums gemessen. Aus den so vorliegenden Werten wird anhand eines hydraulischen Prozessmodells, dass nachfolgend erläutert wird, entweder erst die Viskosität und dann anhand der Temperatur der Anteil des Frostschutzmittels berechnet oder bevorzugt anhand der Temperatur direkt der Anteil des Frostschutzmittels berechnet. Das Prozessmodell kann auf einem Satz von Tabellen basieren, aus denen anhand der berechneten Werte und der Messwerte ein Wert für die Viskosität oder ein Kennwert für den Frostschutzmittelgehalt nachgeschlagen wird und gegebenenfalls interpoliert wird. Ein solcher Satz von Tabellen kann von einem Fachmann durch Messung mit verschiedenen Temperaturen und verschiedenen Frostschutzmittelgehalten leicht erstellt werden. Ebenfalls kann das Prozessmodell auf einem linearen oder nichtlinearen Gleichungssystem basieren, dessen Parameter und/oder Struktur ebenfalls von einem Fachmann durch Messung mit verschiedenen Temperaturen und verschiedenen Frostschutzmittelgehalten leicht erstellt werden kann.

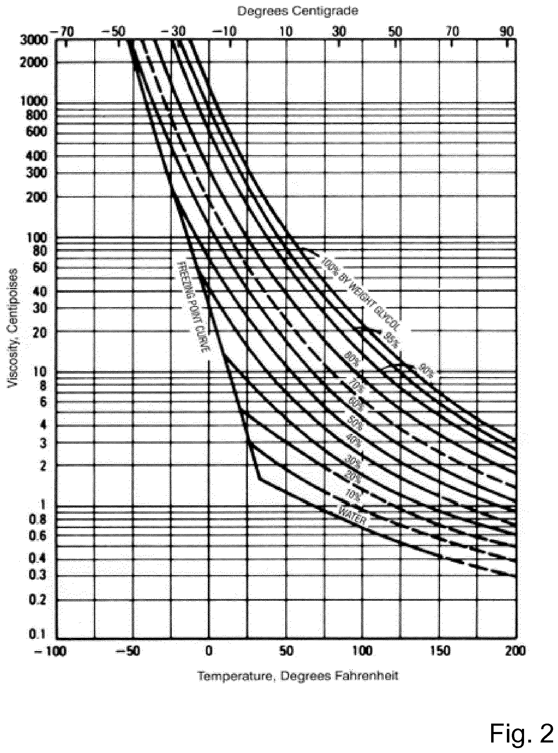

Figur 2 stellt die Abhängigkeit der Viskosität des Wärmeträgermediums über der Temperatur dar für verschiedene Mischungsverhältnisse aus Wasser und Propylenglykol. Erfindungsgemäß ist diese Abhängigkeit in dem hydraulischen Prozessmodell hinterlegt, so dass mit Hilfe des hydraulischen Prozessmodells aus der Viskosität bei bekannter Temperatur auf das Mischungsverhältnis geschlossen werden kann.

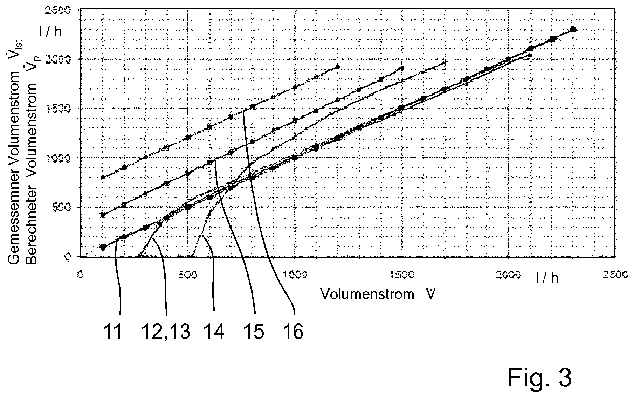

Figur 3 stellt Kalibrierkurven für den vom Volumenstromsensor gemessenen Volumenstrom V̇ᵢₛₜ sowie für den aus den Parametern der Umwälzpumpe berechneten Volumenstrom V̇_{P} jeweils über dem tatsächlichen Volumenstrom V dar. Dabei stellen die Kurven 11, 15, 16 die Kalibrierkurven für den im Verfahrensschritt i) berechneten Volumenstrom V̇_{P} bei verschiedenen Temperaturen und Mischungsverhältnissen von Wasser zu Frostschutzmittel dar. Die deckungsgleichen Kurven 12 und 13 sowie die Kurve 14 stellen die Kalibrierkurven für den im Verfahrensschritt ii) vom Volumenstromsensor 9 gemessenen Volumenstrom V̇ᵢₛₜ bei verschiedenen Temperaturen und Mischungsverhältnissen von Wasser zu Frostschutzmittel dar.

Der Vergleich der Kurven 11 für Wasser und 15 für eine 1:1 Mischung aus Wasser und Glykol bei jeweils 25 °C zeigt, dass mit zunehm endem Gehalt an Frostschutzmittel, was eine zunehmende Viskosität mit sich führt, der berechnete Volumenstrom V̇_{P} höher als der tatsächliche Volumenstrom V̇ ist. Bei Kurve 16 ist gegenüber Kurve 15 die Temperatur mit 5 °C niedriger. Der Vergleich der Kurven 15 und 16 zeigt, dass bei niedriger Temperatur die Viskosität weiter ansteigt und somit der berechnete Volumenstrom gegenüber dem tatsächlichen Volumenstrom noch mehr nach oben abweicht.

Um diese Abweichung feststellen zu können, wird erfindungsgemäß der von einem Volumenstromsensor 9 in Figur 1, bei den vorliegenden Kalibierkurven ein Vortex-Volumenstromsensor, gemessene Volumenstrom V̇ᵢₛₜ herangezogen. Auch hier ist eine Abhängigkeit der Messergebnisse von der Viskosität zu erkennen. So ist die Kurve 12 mit Wasser bei 5 °C und die Kurve 13 mit einer 1:1 Misc hung aus Wasser und Glykol bei 40 °C aufgenommen. Die Kurve 14 ist mit einer 1:1 Mischung aus Wasser und Glykol bei 5 °C aufgenommen. Es ist zu erkennen, dass sich die Kurven für die Messung mit niedrigerer Temperatur nach oben verschieben, jedoch nicht so stark wie die berechneten Werte V̇_{P}. Die dargestellten Kurven können in einer Tabelle aufgenommen werden oder durch eine Formel dargestellt werden, so dass anhand der Messwerte für berechneten Volumenstrom V̇_{P}, gemessenen Volumenstrom V̇ᵢₛₜ und Temperatur T entweder in einem zweistufigen hydraulischen Prozessmodell erst die Viskosität und in einem weiteren Schritt dann aus der Viskoität und der Temperatur der Frostschutzmittelgehalt des Wärmeträgermediums oder alternativ in einem einstufigen hydraulischen Prozessmodell direkt der Frostschutzmittelgehalt des Wärmeträgermediums nachgeschlagen werden kann. Es bleibt jedoch festzuhalten, dass die Abweichungen zwischen den Werten von V̇_{P} und V̇ᵢₛₜ umso größer sind, je niedriger die Temperatur ist. Somit sind bei niedrigen Temperaturen höhere Abweichungen und somit zuverlässigere Ergebnisse zu erwarten. Daher ist das erfindungsgemäße Verfahren bevorzugt bei Umgebungstemperaturen durchzuführen. Da Vortex-Volumenstromsensoren erst ab bestimmten Mindest-Volumenströmen zuverlässige Messwerte liefern, wird das erfindungsgemäße Verfahren bevorzugt oberhalb des Mindest-Volumenstroms durchgeführt. Abhängig vom verwendeten Vortex-Volumenstromsensor ist der Mindest-Volumenstroms 500 oder 1000 l/h. Das erfindungsgemäße Verfahren wird in einem separaten Messzyklus direkt nach dem Befüllen des hydraulischen Kreislaufs 3 mit dem Wärmeträgermedium und/oder kontinuierlich während des Betriebs unter Berücksichtigung der oben genannten Vorgaben für Temperatur und Volumenstrom durchgeführt.

Ein weiterer Aspekt ist, dass unterschiedliche Frostschutzmittel unterschiedliche Viskositäten aufweisen und sich somit unterschiedliche Kalibrierkurven in Figur 3 ergeben. Erfindungsgemäß wird Figur 3 entweder für ein bestimmtes Frostschutzmittel aufgenommen oder die Tabellen oder Formeln, anhand derer der Frostschutzmittelgehalt des Wärmeträgermediums nachgeschlagen werden, basieren auf Durchschnittswerten für üblicherweise eingesetzte Frostschutzmittel.

### Bezugszeichenliste

1 Solarkollektor
2 Gebäude
3 hydraulischer Kreislauf
4 Umwälzpumpe
5 Wärmetauscher
6 Wärmesenke
7 Steuergerät
8 Temperatursensor
9 Volumenstromsensor
11 Kalibrierkurve Volumenstrom Wasser bei 25 °C aus Pumpenparametern berechnet
12 Kalibrierkurve Volumenstrom Wasser bei 5 °C mit Volumenstromsensor gemessen
13 Kalibrierkurve Volumenstrom 50% Wasser, 50% Glykol bei 40 °C mit Volumenstromsensor gemessen
14 Kalibrierkurve Volumenstrom 50% Wasser, 50% Glykol bei 5 °C mit Volumenstromsensor gemessen
15 Kalibrierkurve Volumenstrom 50% Wasser, 50% Glykol bei 25 °C aus Pumpenparametern berechnet
16 Kalibrierkurve Volumenstrom 50% Wasser, 50% Glykol bei 5 °C aus Pumpenparametern berechnet

## Patentansprüche

1. Verfahren zur Bestimmung des Frostschutzmittelgehalts eines wasserbasierten Wärmeträgermediums in einem von einer Umwälzpumpe (4) umgewälzten hydraulischen Kreislauf (3) eines Heizsystems im Betrieb, umfassend die Schritte
ii) Messen des Volumenstroms V̇ᵢₛₜ des Wärmeträgermediums mittels eines Volumenstromsensors (9),
iii) Messen der Temperatur T des Wärmeträgermediums mittels eines Temperatursensors (8),
**dadurch gekennzeichnet, dass** das Verfahren weiterhin die Schritte
i) Berechnen des von der Umwälzpumpe (4) geförderten Volumenstroms V̇ₚ aus der Drehzahl n der Umwälzpumpe (4), eines elektrischen und/oder hydraulischen Kennwerts und eines Pumpenmodells der Umwälzpumpe (4),
iv) Berechnen der Viskosität η des Wärmeträgermediums aus dem Volumenstrom V̇ᵢₛₜ, dem Volumenstrom V̇_{P} auf der Basis eines hydraulischen Prozessmodells,
v) Berechnen des Frostschutzmittelgehalts des Wärmeträgermediums aus der Viskosität η und der Temperatur T auf der Basis eines hydraulischen Prozessmodells umfasst.

2. Verfahren nach Anspruch 1, wobei die Verfahrensschritte iv) und v) des Anspruchs 1 zusammengefasst werden zu
iv') Berechnen des Frostschutzmittelgehalts des Wärmeträgermediums aus dem Volumenstrom V̇ᵢₛₜ, dem Volumenstrom V̇_{P}, der Temperatur T anhand eines hydraulischen Prozessmodells.

3. Verfahren nach Anspruch 1 oder 2, wobei das hydraulische Prozessmodell als Tabelle vorliegt.

4. Verfahren nach Anspruch 1 oder 2, wobei das hydraulische Prozessmodell als parametrische Funktion vorliegt.

5. Verfahren nach einem der vorhergehenden Ansprüche, wobei während der Durchführung der Verfahrensschritte das Wärmeträgermedium eine Temperatur von unter 40 °C aufweist.

## Claims

1. Method for determining the antifreeze agent content of a water-based heat transfer medium in a hydraulic circuit (3), circulated by a circulating pump (4), of a heating system during operation, comprising the steps
ii) measuring the volume flow V̇ᵢₛₜ of the heat transfer medium by means of a volume flow sensor (9),
iii) measuring the temperature T of the heat transfer medium by means of a temperature sensor (8),
**characterised in that** the method furthermore comprises the steps
i) calculating the volume flow Vₚ conveyed by the circulating pump (4) from the revolution speed n of the circulating pump (4), an electrical and/or hydraulic variable and a pump model of the circulating pump (4),
iv) calculating the viscosity η of the heat transfer medium from the volume flow Vᵢₛₜ, the volume flow Vₚ on the basis of a hydraulic process model,
v) calculating the antifreeze agent content of the heat transfer medium from the viscosity η and the temperature T on the basis of a hydraulic process model.

2. Method according to claim 1, wherein the method steps iv) and v) of claim 1 are combined to form
iv') measuring the antifreeze agent content of the heat transfer medium from the volume flow Vᵢₛₜ, the volume flow Vₚ, the temperature T with reference to a hydraulic process model.

3. Method according to claim 1 or 2, wherein the hydraulic process model is present as a table.

4. Method according to claim 1 or 2, wherein the hydraulic process model is present as a parametric function.

5. Method according to any of the preceding claims, wherein during the execution of the method steps the heat transfer medium has a temperature of below 40 °C.

## Revendications

1. Procédé servant à déterminer la teneur en antigel d'un milieu caloporteur à base d'eau dans un circuit (3) hydraulique mis en circulation par une pompe de recirculation (4) d'un système de chauffage en fonctionnement, comprenant les étapes
ii) de mesure du flux volumique V̇ᵢₛₜ du milieu caloporteur au moyen d'un capteur de flux volumique (9),
iii) de mesure de la température T du milieu caloporteur au moyen d'un capteur de température (8),
**caractérisé en ce que** le procédé comprend par ailleurs les étapes
i) de calcul du flux volumique V̇ₚ refoulé par la pompe de recirculation (4) à partir de la vitesse de rotation n de la pompe d recirculation (4), d'une valeur caractéristique électrique et/ou hydraulique et d'un modèle de pompe de la pompe de recirculation (4),
iv) de calcul de la viscosité η du milieu caloporteur à partir du flux volumique Vᵢₛₜ, du flux volumique Vₚ sur la base d'un modèle de processus hydraulique,
v) de calcul de la teneur en antigel du milieu caloporteur à partir de la viscosité η et de la température T sur la base d'un modèle de processus hydraulique.

2. Procédé selon la revendication 1, dans lequel les étapes de procédé iv) et v) de la revendication 1 sont regroupées en
iv') le calcul de la teneur en antigel du milieu caloporteur à partir du flux volumique V̇ᵢₛₜ, du flux volumique V̇ₚ, de la température T à l'aide d'un modèle de processus hydraulique.

3. Procédé selon la revendication 1 ou 2, dans lequel le modèle de processus hydraulique est présent en tant que table.

4. Procédé selon la revendication 1 ou 2, dans lequel le modèle de processus hydraulique est présent en tant que fonction paramétrique.

5. Procédé selon l'une quelconque des revendications précédentes, dans lequel le milieu caloporteur présente, pendant la mise en oeuvre des étapes de procédé, une température inférieure à 40 °C.
